# EUROPEAN PATENT APPLICATION

(11) **EP 2 827 113 A1**
(43) Date of publication of application: **21.01.2015**
(21) Application number: 13177072.9
(22) Date of filing: 18.07.2013
(51) Int. Cl.: G01F 15/00, G01F 15/04, F16K 17/38, G01D 11/30

(54) **Gas meter with a fire safety device**

(71) Applicant: Itron GmbH, 76185 Karlsruhe (DE)
(72) Inventor: Reichl, Jochen, 76185 Karlsruhe (DE); Einhaus, Manfred, 76185 Karlsruhe (DE)
(74) Representative: Korenberg, Alexander Tal

(57) **Abstract**

Gas meters and sensor components for use with gas meters are described, in particular, sensor components comprising sensors for analysis of at least one characteristic of a gas passing through the meter. In one example, such a gas meter comprises a sensor port for connecting a sensor component to the gas meter. The sensor port comprising a conduit for fluidically connecting the sensor component to an interior of the gas meter and a valve for opening and closing the conduit, the sensor port being configured such that the valve is open when the sensor component is connected to the sensor port and closed when the sensor component is not connected to the sensor port. The sensor port further comprises a fire safety portion arranged to become deformable at a lower temperature than other parts of the sensor port such that, when the sensor port is heated above a threshold temperature, the fire safety portion deforms to enable the valve to close with the sensor component connected.

## Description

### BACKGROUND

Gas meters are used to measure the amount of gas entering a property from a supply, in order to calculate the consumption of gas at the property. Typically gas meters measure the amount of gas by measuring the volume that passes through the meter. Such measurements do not inherently take account of important characteristics of the gas supplied to the property, for example, the pressure or temperature of the gas, and so do not alone provide an accurate indication of the gas consumed at a property. Therefore, particularly in commercial and industrial gas meters, sensors are typically used to measure such characteristics to enable a more accurate calculation to be made.

In order to ensure effective operation, the sensor must be calibrated periodically which requires that the sensor is removed from the meter for calibration. Removal of the sensor has the drawback that the supply of the property must be disconnected to avoid gas leaking from the meter while the sensor is removed.

### SUMMARY

In a first aspect there is provided a gas meter comprising a sensor port for connecting a sensor component to the gas meter, the sensor port comprising a conduit for fluidically connecting the sensor component to an interior of the gas meter and a valve for opening and closing the conduit, the sensor port being configured such that the valve is open when the sensor component is connected to the sensor port and closed when the sensor component is not connected to the sensor port.

When the valve is open, the interior of the gas meter is in fluidic communication with the sensor component. Conversely, when the valve is closed, the interior of the gas meter is not in fluidic communication with the sensor component.

Since the valve is closed when the sensor component is not connected to the sensor port, the valve is closed when the sensor component is removed from the sensor port. This prevents, or at least reduces, gas leakage from the meter, such that the sensor component may be removed from the sensor port without requiring the gas supply to the meter to be turned off. When the sensor component is removed from the sensor port, the gas meter can, in some embodiments, measure the volume of gas passing through the meter without corrections to account for characteristics of the gas, for example, temperature and pressure.

In some embodiments, the sensor port comprises a fire safety portion arranged to become deformable at a lower temperature than that at which other parts of the sensor port become deformed such that, when the sensor port is heated above a threshold temperature, the fire safety portion deforms to enable the valve to close with the sensor component connected. For example, the other parts of the sensor port may be the remainder of the sensor port, the valve, a moveable member of the valve, a valve seat or any other suitable portion of the sensor port.

In some embodiments, the fire safety portion comprises a plastics material. For example, materials sold under the trade name of Polyac® PA-765 and/or Delrin® 100 NC010 may be used.

In some embodiments, the fire safety portion comprises a material having a softening point between 150 °C and 250 °C.

Advantageously, the fire safety portion ensures that at temperatures above the threshold temperature, for example in the case of a fire, the valve will be closed to the flow of gas in any case, either when the sensor component is connected to the sensor port, for example when the sensor component is fitted to the meter, or when the sensor component is not connected to the sensor port, for example, when the sensor component is removed from the meter. In such embodiments the valve may act as a fire safety device by closing the valve irrespective of whether the sensor component is connected.

In some embodiments having such a valve and a fire safety portion, the valve comprises a valve body housing a moveable member and defining a valve seat. A biasing component is arranged to bias the moveable member into engagement with the valve seat to close the valve.

In some embodiments, when the fire safety portion deforms, the biasing component forces the moveable member towards the valve seat, and hence closes the valve. In such embodiments, when the fire safety portion is deformed, the valve will be closed irrespective of whether the sensor component is connected to the sensor port or not.

In some embodiments, the port is arranged such that the moveable member is engageable by the sensor component to open the valve.. For example, a portion of the moveable member may be present at an opening of the sensor port to enable the moveable member to be contacted when the sensor component is in (connected to) the port. In such embodiments, when the sensor component is connected to the port, the sensor component displaces the movable member causing the valve to open. When the sensor component is not connected to the sensor port or absent, the sensor component does not displace the moveable member and so the valve is closed. In these and some other embodiments, such displacement results directly from the movement of the sensor component to provide a simple and effective valve mechanism.

Alternatively, in certain other embodiments displacement of the moveable member may be indirect. For example, the sensor component may engage a mechanism which in turn engages the moveable member causing the valve to open. Conversely, when the sensor component does not engage the mechanism, the mechanism does not engage the moveable member and so the valve is closed.

In some embodiments the biasing component comprises a resilient member such as a spring or any other suitable alternative which would be apparent to those skilled in the art.

In some embodiments, the valve may comprise a spacer engageable by the sensor component to open the valve. In some embodiments the moveable member comprises the spacer. Alternatively, the sensor component may comprise the spacer. In some embodiments, the spacer provides a fluid path between the sensor component and moveable member. The fluid path is, in some embodiments, provided by projections on the spacer. In other embodiments, the fluid path is provided by through-holes in the spacer or any other suitable arrangement enabling fluid to pass between the moveable member and a component engaging the spacer.

In some embodiments the spacer is arranged to become deformable at a lower temperature than other parts of the valve such that, when the valve is heated above a threshold temperature, the spacer deforms to enable the valve to close. When the spacer deforms, the biasing component forces the moveable member towards the valve seat, and hence closes the valve. In such embodiments, when the spacer is deformed, the valve will be in the closed position irrespective of whether the sensor component is connected to the sensor port or not. For example, the other parts of the sensor port may be the remainder of the sensor port, the valve, the moveable member of the valve, the valve seat or any other suitable portion of the sensor port.

Advantageously, such a spacer ensures that at temperatures above the threshold temperature, for example in the case of a fire, the valve will be closed to the flow of gas in any case, either when the sensor component connected to the sensor port, for example when the sensor component is fitted to the meter, or when the sensor component is not connected to the meter, for example, when the sensor component is removed from the meter.

In some embodiments, the spacer comprises a plastics material. For example, materials sold under the trade name of Polyac® PA-765 and/or Delrin® 100 NC010 may be used.

In some embodiments, the spacer comprises a material having a softening point between 150 °C and 250 °C.

In some embodiments, the spacer comprises a plurality of projections. The projections may be arranged to provide a fluid path between the interior of the gas meter and the sensor component.

In some embodiments, the moveable member comprises a sealing surface such that, when the valve is closed, the sealing surface abuts the valve seat to form a seal. In some embodiments, the moveable member comprises a cap portion comprising the spacer and the sealing surface. In some embodiments, the moveable member comprises a cap portion and a valve disc, which may be coupled together, for example via a press fit arrangement. In other embodiments the moveable member comprises a single component.

In some embodiments, movement of the valve between the open and closed positions and/or movement of the sensor component between a connected and disconnected configuration is along a linear direction of motion. In some embodiments the linear direction of motion of the valve and the linear direction of motion of the sensor component are parallel, for example, coaxial. In other embodiments, the valve pivots between the open and closed configurations. In some embodiments, movement of the sensor component includes a rotational movement. In some embodiments, the sensor component engages with the sensor port via a thread or a bayonet fitting. In some embodiments, a plurality of lugs interacts with slots to provide a bayonet fitting. The slots may house a mechanism to open the valve.

In some embodiments the valve comprises a check type valve, e.g. a ball check valve. Alternatively, any other suitable valve may be used as will be apparent to those skilled in the art.

In a second aspect, there is provided a gas meter as described above in combination with a sensor component.

In some embodiments the gas meter and sensor component in combination comprise a spacer such that, when the sensor component engages the moveable member, the spacer is situated in between the sensor component and the moveable member. In some embodiments the spacer is provided on the moveable member. In other embodiments the spacer is provided on the sensor component. In some embodiments, the spacer is arranged to become deformable at a lower temperature than other parts of the valve such that, when the valve is heated above a threshold temperature, the spacer deforms to enable the valve to close, as described above.

The sensor component is, in some embodiments, configured to engage the portion of the sensor port or moveable member at a free end of a pipe connecting the interior of the sensor component to the sensor port. In other embodiments, a separate member is provided for engaging the sensor port or moveable member.

In some embodiments, the sensor component comprises a sealing component such that, when the sensor component is connected to the sensor port and the valve is open, the interior of the meter is in fluidic communication with the sensor component and not with an exterior of the meter. The sealing component is arranged to create a seal between the sensor component and the sensor port such that, when the sensor component is disconnected, the valve closes prior to the seal being broken.

### BRIEF DESCRIPTION OF THE DRAWINGS

An embodiment of a gas meter having a sensor port will now be described, by way of example only, with reference to the accompanying drawings in which:
Figure 1 shows a schematic cross sectional view of a gas meter having sensor port fitted with a sensor component;
Figure 2 shows a perspective cross sectional view of a sensor port of a gas meter fitted with a sensor component;
Figure 3 shows an exploded view of a sensor port of a gas meter;
Figure 3a shows a close up exploded view of the moveable portion of the sensor port;
Figure 4 shows a plan view of a sensor component; and
Figure 5 shows an alternative embodiment of a sensor component.

### SPECIFIC DESCRIPTION OF CERTAIN EMBODIMENTS

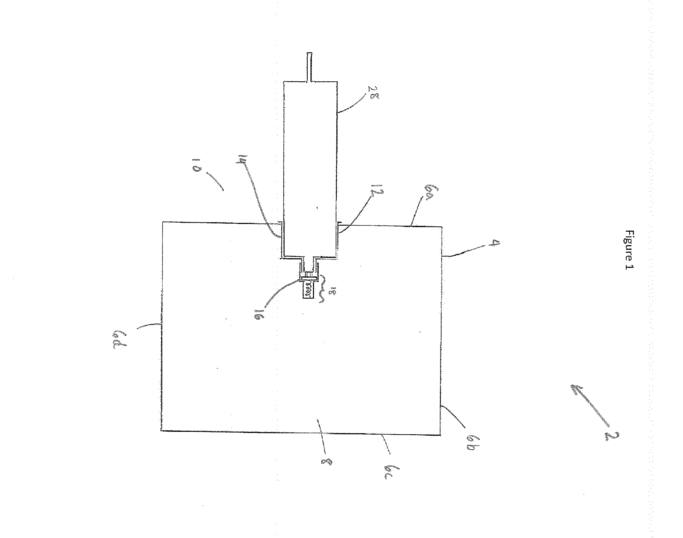

With reference to figure 1, a gas meter 2 comprises a housing 4 (not drawn to scale in figure 1). The housing 4 comprises at least one wall defining an interior 8 and exterior 10 of the housing 4. In the embodiment shown in figure 1 the housing 4 comprises a first 6a, second 6b, third 6c and fourth wall 6d.

The gas meter 2 comprises a sensor port 12 extending through the first wall 6a of the housing 4.

With reference to figures 1, 2 and 3, the sensor port 12 comprises a port portion 14 and a valve portion 16 which together form a valve body of a valve associated with the sensor port 12. The valve comprises a movable portion 18 housed in the valve body.

The port portion 14 is coupled to the housing 4 of the gas meter at a first end 14a and is coupled to the valve portion 16 at a second end 14b. The moveable portion 18 is provided between the port portion 14 and the valve portion 16, as will be described in more detail below.

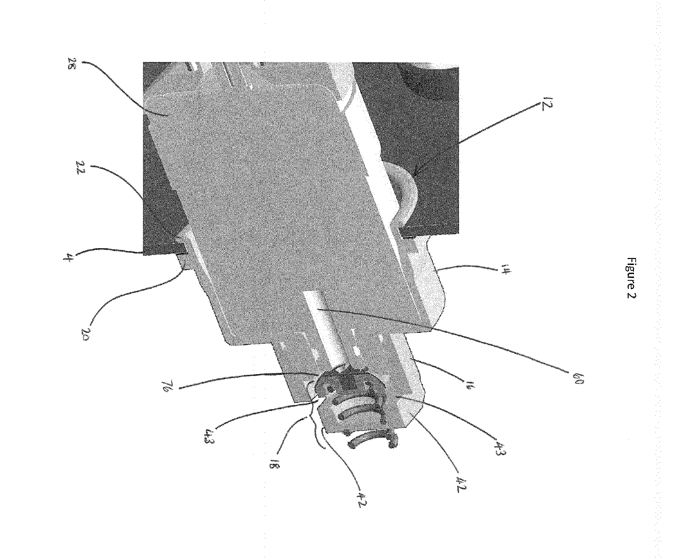

The port portion 14 comprises, at the first end 14a, an interior flange 20 and an exterior flange 22, either side of the first wall 6a of the gas meter 2 to secure the sensor port 12 to the gas meter 2, as is shown in figure 2.

At its first end 14a, the port portion 14 defines an entry 24 to a cavity 26 for housing at least a portion of a sensor component 28. The cavity 26 is shaped to correspond to the shape of the sensor component 28.

The port portion 14 is substantially cylindrical in shape and comprises a step 30 along its length such that the diameter of the port portion 14 at the first end 14a is larger than the diameter at the second end 14b.

At the second end 14b, the port portion14 defines an opening 32 and a valve seat 34 surrounding the opening 32 for engagement with the moveable portion 18, as will be described in more detail below. When the moveable portion 18 is not in sealing engagement with the valve seat 34, the port portion 14 provides a flow path for a gas to pass from the interior 8 to the exterior 10 of the housing 4 wherein the gas flows into the port portion14 through the opening 32, through the cavity 26, and out of the port portion14 through the entry 24, or vice versa for gas flowing from the exterior 10 of the housing 4 to the interior 8.

The valve portion 16 is shaped to define a cavity 36 at a first end 16a which may be accessed via an entry 38. The cavity 36 is shaped to correspond to the shape of the port portion 14 such that the port portion 14 is housed at its second end 14b in the cavity 36 to form a seal.

At a second end 16b, the valve portion 16 comprises a recess 40 which supports the moveable portion 18 as will be described below.

The valve portion 16 is generally cylindrical in shape and comprises a pair of flat portions 42 towards the second end 16b. These flat portions 42 are shaped to engage with a tool for assembly of the sensor port, for example a wrench.

A pair of slots 43 are provided adjacent the flat portions 42 such that the interior of the valve portion 16 is in fluid communication with the interior 8 of the gas meter 2.

The moveable portion 18 comprises a resilient member 44, for example, a spring, coupled to a movable member 46, the movable member comprising a valve disc 48 coupled to a cap portion 50.

The resilient member 44 is supported towards one end by the recess 40 of the valve portion 16. The other end of the resilient member 44 is coupled to the moveable member 46 via the valve disc 48.

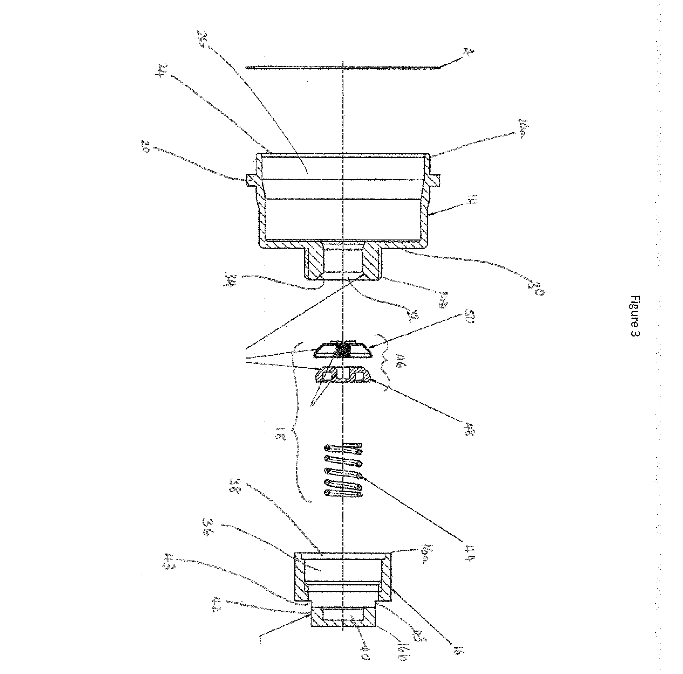

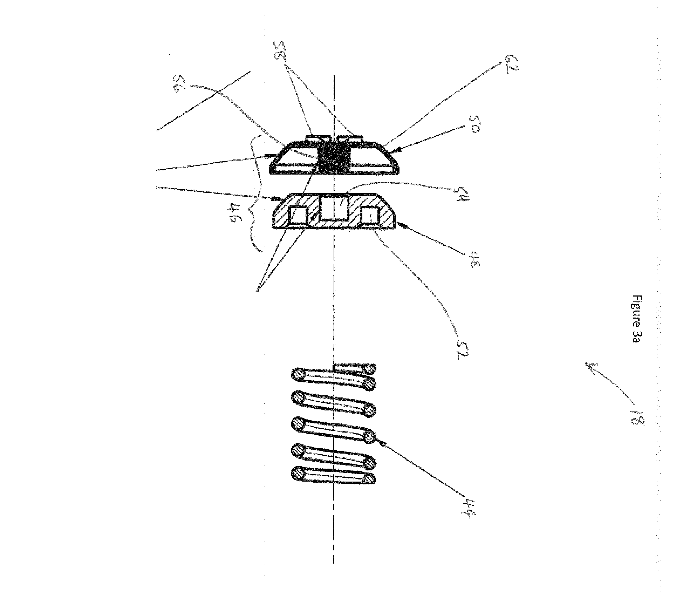

Referring to figure 3a, the valve disc 48 comprises a groove 52 on one face which engages with the resilient member 44 to couple the valve disc 48 and the resilient member 44 together. At the other face, the valve disc 48 comprises a recess 54 for engagement with a projection 56 of the cap portion, such that the valve disc 48 and cap portion 50 are coupled together. The recess 54 and projection 56 may engage via a press fit.

The cap portion 50 comprises a spacer 58 formed by plurality of projections extending from the cap portion 50 towards the opening 32 of the port portion 14. The projections provide a fluid path between the interior of the gas meter and a conduit 60 of the sensor component (see figure 2) through the gaps between the projections.

The cap portion 50 also comprises a sealing surface 62 which is complementary in shape to the valve disc 48 such that, when the valve is closed, the sealing surface is wedged between the valve seat 34 and the valve disc 48 to form a seal.

The cap portion 50 comprises a material having a softening point lower than the melting point (for metallic parts) or the softening point (for plastic parts), as the case may be, of the other elements of the sensor port 12. For example, materials sold under the trade name of Polyac® PA-765 and/or Delrin® 100 NC010 may be used. In any case, the material of the cap portion 50 (specifically the spacer 58) is chosen such that the spacer 58 becomes sufficiently deformable for the valve to close with the sensor component present/connected at a temperature at which the structural integrity of the sensor port is not yet substantially compromised and at which it is desired to close the valve for reasons of fire safety, for example at a temperature of 150 °C, 250°C or any temperature between these values, for example 200°C.

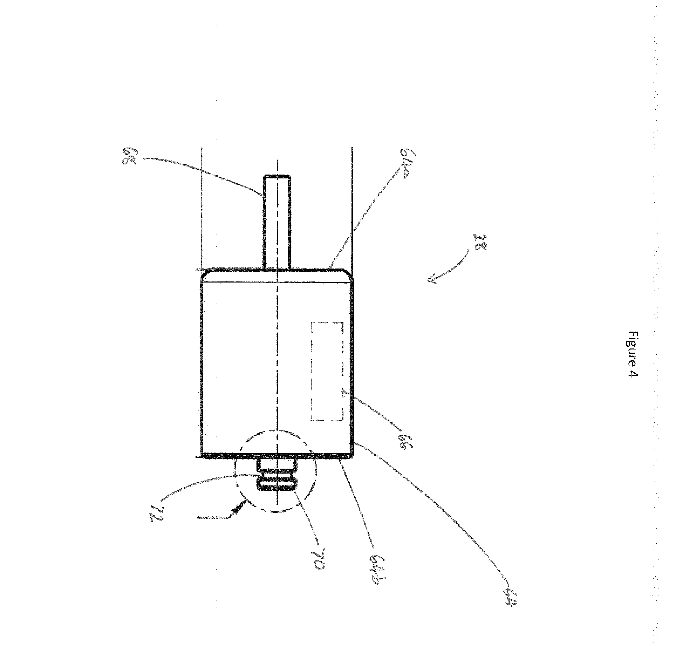

With reference to figure 4, the sensor component 28 comprises a sensor housing 64 and a sensor unit 66. The sensor housing 64 is generally cylindrical comprising a first face 64a and a second face 64b. The sensor housing 64 is shaped such that at least a portion of the sensor housing 64 corresponds in shape to the cavity 26 in the port portion 14.

The sensor housing 64 comprises a cable 68 for connecting the sensor unit 66 to other components, such as a read-out processor, the cable 68 extending from the first face 64a and a connecting pipe 70 extending from the second face 64b. The connecting pipe 70 has a groove 72 for receipt of an o-ring or other sealing component. The connecting pipe 70 comprises a conduit 60 such that gas may flow through the entry pipe to the sensor unit 64.

The sensor unit 66 comprises at least one sensor for detecting at least one characteristic associated with a gas flowing through the meter, for example, temperature and pressure.

In use, the sensor component 28 is fitted to the gas meter 2 via the sensor port 12.

Prior to fitting the sensor component 28 to the gas meter 2, the moveable member 46 abuts the valve seat 34 due to the force applied by the resilient member 44. This forms a seal between the sealing surface 62 of the cap portion 50 and the valve seat 34 such that gas cannot pass through the opening 32.

The sensor component 28 is introduced into the cavity 26 of the port portion 14 through the entry 24. The sensor component 28 is introduced to the sensor port 12 such that the axis of the sensor port 12 and the axis of the sensor component 28 are substantially coaxial.

As the sensor component 28 is introduced into the sensor port 12, the connecting pipe 70 of the sensor component 28 engages the spacer 58. The force applied to the sensor component 28 to introduce it into the sensor port 12 acts against the spacer 58 and counters the force applied to the movable member 46 by the resilient member 44 such that the moveable member 46 is moved out of engagement with the valve seat 34. Movement of the moveable member 46 away from the valve seat 34 creates a path 76 such that the interior of the housing 8 is in fluid communication with the conduit 72 of the sensor component 28. Gas may then be analysed by the sensor unit 64. Gas is prevented from leaking to the exterior 10 of the housing by a sealing component occupying the groove 72 of the connecting pipe 70.

When the sensor component 28 is removed from the sensor port 12, for example for calibration, the reverse of the action described above occurs. As the sensor component 28 is removed, the moveable member 46 moves towards the valve seat 34 under the force applied by the resilient member 44. When the sensor component 28 is removed from the sensor port 12 to the extent that the connecting pipe 70 of the sensor component 28 no longer engages the spacer 58, the moveable member 46 again abuts the valve seat 34 due to the force applied by the resilient member 44 such that a seal is formed between the sealing surfaces 62 of the cap portion 50 and the valve seat 34. Consequently, gas cannot pass through the opening 32 from the interior 8 of the meter housing 4 to the exterior 10. The groove 72 is positioned along the connecting pipe 70 such that, as the sensor component 28 is removed, the seal created between the sensor component 28 and the sensor port 12 by the sealing component occupying the groove 72 is maintained until after the valve has closed.

Therefore, a gas supply to the gas meter 2 need not be disconnected when the sensor component 28 is being fitted and/or removed, since the action of the sensor port 12 will prevent or substantially reduce the escape of gas from the meter 2.

When the temperature of the sensor port 12 exceeds a threshold temperature and the sensor component 28 is fitted to the sensor port 12, the shape of the cap portion 50, in particular the spacer 58, will deform and yield to the biasing force exerted by the resilient member 44. When the spacer 58 deforms, the force applied to the valve disc 48 by the resilient member 44 is sufficient such that the valve disc 48 is moved towards the valve seat 34. When the spacer 58 has deformed sufficiently, the valve disc 48 abuts the valve seat 34 due to the force applied by the resilient member 44. This forms a seal between the valve disc 48 and the valve seat 34 such that the path 76 is closed in spite of the presence of the sensor component 28. Consequently, gas cannot pass through the opening 32 and is prevented from passing from the interior 8 of the meter housing 4 to the exterior 10.

This is advantageous in preventing gas leaking from the meter at high temperature, for example, in the case of a fire, since the valve will be closed even though the sensor component 28 is fitted to the sensor port 12.

In the case where the sensor component 28 is not fitted to the sensor port 12, the valve is already closed since the moveable member 46 abuts the valve seat 34, so that the valve remains closed when the spacer 58 becomes deformed as the temperature of the sensor port 12 exceeds the threshold.

In the case of a rise of the temperature beyond that needed to sufficiently soften the spacer 58 to enable the valve to close, the material of the cap portion 50 may become deformable to an extent such that the sealing surface 62 becomes sufficiently deformable to yield under the pressure applied by the resilient member 44. In that case, the shape of the sealing portion 62 of the spacer 58 will also deform. This may result in some movement of the moveable member 46, without substantial loss of the seal. Even if the sealing surface 62 has melted completely, the complimentary shape of the valve disc 48 will ensure a substantial seal is maintained between the moveable member 46 and the valve seat 34.

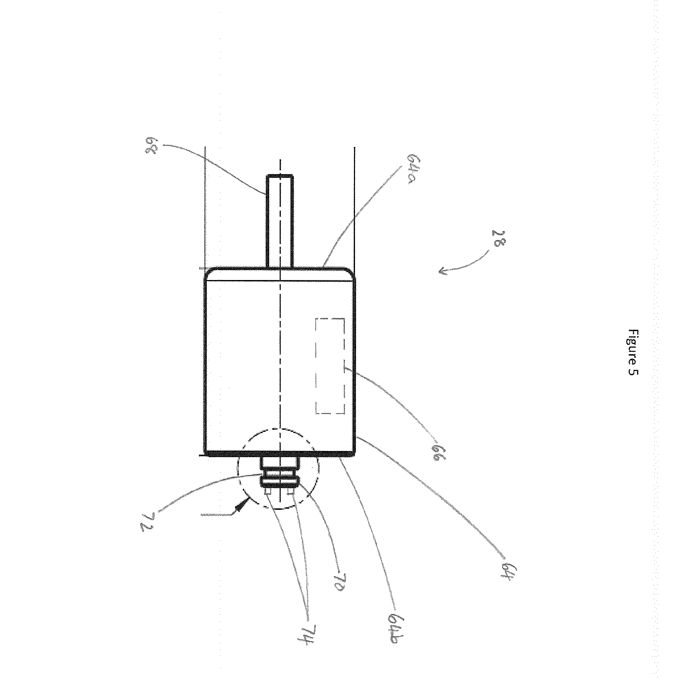

In an alternative embodiment, as shown in figure 5, the connection pipe 70 of the sensor component 28 comprises a spacer 74 comprising a plurality of projections arranged to engage the moveable member 46 of a sensor port 12. In such an embodiment, the moveable member of the sensor port is not provided with a spacer 74 since this is provided instead on the sensor component 28. Other than these changes, the embodiment is the same as the embodiment described above. To provide a fire safety function, either the spacer 74 can be arranged to be deformable, or a counter portion engaging the projections of the spacer 74 on the moveable member.

It will be understood that the above description is of specific embodiments by way of example only and that many modifications, juxtapositions and alterations will be within the skilled person's reach and are intended to be covered by the scope of the appendent claims.

## Claims

1. A gas meter comprising a sensor port for connecting a sensor component to the gas meter, the sensor port comprising a conduit for fluidically connecting the sensor component to an interior of the gas meter and a valve for opening and closing the conduit, the sensor port being configured such that the valve is open when the sensor component is connected to the sensor port and closed when the sensor component is not connected to the sensor port.

2. A gas meter according to claim 1, wherein the sensor port comprises a fire safety portion arranged to become deformable at a lower temperature than other parts of the sensor port such that, when the sensor port is heated above a threshold temperature, the fire safety portion deforms to enable the valve to close with the sensor component connected.

3. A gas meter according to claim 1 or 2, wherein the valve comprises a valve seat, a valve body housing a moveable member, and a biasing component arranged to bias the movable member towards the valve seat such that the moveable member is engageable by the by the sensor component to open the valve.

4. A gas meter according to claim 3, wherein the moveable member comprises a spacer engageable by the sensor component to open the valve.

5. A gas meter according to claim 4, wherein the spacer is arranged to become deformable at a lower temperature than other parts of the valve such that, when the valve is heated above a threshold temperature, the spacer deforms to enable the valve to close with the sensor component connected.

6. A gas meter according to claim 4 or 5, wherein the spacer comprises a plurality of projections to provide a fluid path between the projections.

7. A gas meter according to any of claims 4, 5 or 6, wherein the moveable member comprises a cap portion comprising the spacer and a sealing surface such that, when the valve is closed, the sealing surface abuts the valve seat.

8. A gas meter according to claim 1 in combination with a sensor component arranged to fit the sensor port.

9. A gas meter in combination with a sensor component according to claim 8, wherein the valve comprises a valve seat, a valve body housing a moveable member, and a biasing component arranged to bias the movable member towards the valve seat, such that, when connected, the sensor component engages the moveable member.

10. A gas meter in combination with a sensor component according to claim 9, wherein a spacer is provided such that, when the sensor component engages the moveable member, the spacer is situated in between the sensor component and the moveable member.

11. A gas meter in combination with a sensor component according to claim 10, wherein the spacer is provided on the moveable member.

12. A gas meter in combination with a sensor component according to claim 10 or 11, wherein the spacer is arranged to become deformable at a lower temperature than other parts of the valve such that, when the valve is heated above a threshold temperature, the spacer deforms to enable the valve to close with the sensor component connected.

13. A gas meter in combination with a sensor component according to any of claims 10, 11 or 12, wherein the spacer comprises a plurality of projections to provide a fluid path between the projections.

14. A gas meter in combination with a sensor component according to any of claims 8 to 13, wherein the sensor component is arranged to create a seal between the sensor component and the sensor port such that, when the sensor component is disconnected, the valve closes prior to the seal being broken.

15. A gas meter or gas meter in combination with a sensor component as claimed in any of claims 4 to 7 or 10 to 13, wherein the spacer provides a fluid path between the sensor component and moveable member.
